**Europäisches Patentamt**

**European Patent Office**

**Office européen des brevets**

(19)

(11) Veröffentlichungsnummer : **0 396 145 B1**

(12)

# EUROPÄISCHE PATENTSCHRIFT

(45) Veröffentlichungstag der Patentschrift :
**15.07.92 Patentblatt 92/29**

(51) Int. Cl.$^5$ : **F16D 65/08, F16D 51/20**

(21) Anmeldenummer : **90108449.1**

(22) Anmeldetag : **04.05.90**

(54) **Trommelbremse.**

(30) Priorität : **05.05.89 DE 8905683 U**

(43) Veröffentlichungstag der Anmeldung :
**07.11.90 Patentblatt 90/45**

(45) Bekanntmachung des Hinweises auf die
Patenterteilung :
**15.07.92 Patentblatt 92/29**

(84) Benannte Vertragsstaaten :
**DE ES FR GB IT**

(56) Entgegenhaltungen :
EP-A- 0 092 470
DE-B- 1 090 115
FR-A- 2 030 199
GB-A- 1 146 573
US-A- 1 572 680
US-A- 3 003 591

(73) Patentinhaber : **LUCAS INDUSTRIES public
limited company
Great King Street
Birmingham, B19 2XF West Midlands (GB)**

(72) Erfinder : **Gerd, Michel
Im Vogelsang 7
W-5401 Emmelshausen (DE)**
Erfinder : **Daniels, Eckhard
Friedrich-Ebert-Strasse 5
W-5451 Melsbach (DE)**

(74) Vertreter : **Goetz, Rupert, Dipl.-Ing. et al
Wuesthoff & Wuesthoff Patent- und
Rechtsanwälte Schweigerstrasse 2
W-8000 München 90 (DE)**

## Beschreibung

Die Erfindung betrifft eine Trommelbremse mit

– Bremsbacken, deren Bremsflächen in Umfangsrichtung gegeneinander versetzt der Bremsfläche einer Bremstrommel gegenüberliegen,
– mindestens einer Betätigungsvorrichtung zum Andrücken der Bremsbacken an die Bremstrommel,
– einer Ankerplatte, die für die Bremsbacken je drei Führungsflächen aufweist, und
– Niederhaltefedern, die bestrebt sind, die Bremsbacken an ihren Führungsflächen anliegend zu halten.

Trommelbremsen können bei bestimmten Betriebszuständen störende Geräusche erzeugen, die ihren Ursprung in Schwingungen teils der Bremstrommel, teils der Ankerplatte haben. Beispielsweise sind bei Trommelbremsen für Personenkraftwagen Schwingungen der Ankerplatte im Frequenzbereich zwischen etwa 600-700 Hz gemessen worden, die bei hydraulischen Bremsbetätigungen mit einem mäßigen Druck von 10-25 bar und bei Fahrgeschwindigkeiten bis zu etwa 60 km/h aufgetreten sind. Ein zweiter, schwächerer aber bei geringen Fahrgeräuschen doch störender Geräuschtyp durch Schwingungen der Ankerplatte mit einer Frequenz von etwa 950 Hz kann bei kalten Bremsen unter einem Bremsdruck von meist mehr als 30 bar auf dem letzten halben Meter Bremsweg, also bei sehr geringer Fahrgeschwindigkeit, auftreten. All diese Schwingungen können meist erfolgreich durch Massenankopplung an der Ankerplatte bekämpft werden.

So ist es beispielsweise aus der EP 0092470 B1 bekannt, an der Ankerplatte einer Trommelbremse eine Dämpfungsvorrichtung zu befestigen, die aus einem Bleiklotz und einer zwischen diesem und der Ankerplatte angeordneten Gummiplatte besteht. Eine solche Dämpfungsvorrichtung kann mittels einer Blattfeder aus Metall an einem äußeren Randbereich der Ankerplatte befestigt werden.

Schwingungen der Ankerplatte einer Trommelbremse sind auch schon gemäß der US 1572680 A dadurch bekämpft worden, daß Öffnungen in der Ankerplatte mit Stopfen aus einem anderen Werkstoff als die Ankerplatte selbst verschlossen worden sind, beispielsweise mit Stopfen aus Blei oder anderem Werkstoff, die sich in ihrem Schwingungsverhalten derart von der Ankerplatte unterscheiden, daß sie nicht zusammen mit ihr schwingen.

Es gibt jedoch einen weiteren Geräuschtyp, der beispielsweise in einem Frequenzbereich bei etwa 850 Hz liegen und bei einem Bremsdruck von etwa 6-7 bar und Geschwindigkeiten von bis zu 140 km/h auftreten kann. Dieser Geräuschtyp stellt hauptsächlich eine Trommelresonanzschwingung dar und kann deshalb nicht durch bekannte Maßnahmen an der Ankerplatte beseitigt werden.

Der Erfindung liegt die Aufgabe zugrunde, Geräusche, die bei Betätigung von Trommelbremsen entstehen können, besonders durch Schwingungen der Bremstrommel, weiter zu vermindern.

Die Aufgabe ist erfindungsgemäß bei einer Trommelbremse der eingangs genannten Gattung dadurch gelöst, daß

– von den drei Führungsflächen mindestens einer Bremsbacke nur zwei mindestens annähernd in einer gemeinsamen, zur Achse der Bremstrommel normalen Eben liegen, und
– die dritte Führungsfläche derselben Bremsbacke gegen die genannte Ebene axial versetzt angeordnet ist, so daß
– diese Bremsbacke von der zugehörigen Niederhaltefeder in einer Ruhestellung gehalten wird, in der ihre Bremsfläche in bezug auf die Bremstrommel leicht verkantet ist.

Das Verkanten einer Bremsbacke einer Innenbacken-Trommelbremse mit dem Ziel, ein unangenehmes Quietschen zu vermeiden, ist zwar aus der DE 1090115 B bekannt. Dort wird das Verkanten jedoch nicht durch an der Ankerplatte vorgesehene Auflageflächen unterschiedlicher Höhe erreicht, sondern dadurch, daß die Bremsbarke auf einem Lagerbolzen gelagert ist, der in Richtung auf ein an der Ankerplatte befestigtes Anlageblech, gegen das sich die Bremsbacke abstützt, geneigt ist.

Mit der Erfindung wird auf besonders einfache Weise erreicht, daß mindestens eine Bremsbacke in unbetätigtem Zustand von der zugehörigen Niederhaltefeder in einer leichten Schrägstellung gehalten wird, die sie auch zu Beginn jeder Bremsbetätigung beibehält, wodurch die Bremsbacke bei niedrigen Bremsdrücken geringfügig verkantet an die Bremstrommel angelegt wird. Diese Verkantung bewirkt, daß die Bremsbacke die Bremstrommel mit der Ankerplatte koppelt und dadurch beide an selbständigen Schwingungen hindert.

Vorzugsweise ist die dritte Führungsfläche ungefähr auf der Winkelhalbierenden zwischen den in einer gemeinsamen achsnormalen Ebene liegenden Führungsflächen derselben Bremsbacke angeordnet.

Die Erfindung ist insbesondere anwendbar bei einer Trommelbremse mit einer bei der Hauptdrehrichtung der Bremstrommel auf ein Widerlager auflaufenden Bremsbacke und einer ablaufenden Bremsbacke. Für diesen Anwendungsfall ist die Erfindung vorzugsweise dadurch weitergebildet, daß

– von den drei Führungsflächen der auflaufenden Bremsbacke die dritte Führungsfläche gegenüber den beiden anderen Führungsflächen erhaben angeordnet ist, und
– von den drei Führungsflächen der ablaufenden Bremsbacke die dritte Führungsfläche gegenüber den

2

beiden anderen Führungsflächen vertieft angeordnet ist.

Die erfindungsgemäße Anordnung der Führungsflächen läßt sich durch übliches Stanzen der Ankerplatte ohne Mehrkosten erzielen; dazu ist es nur erforderlich, ein gegenüber bisher verwendeten Stanzwerkzeugen entsprechend geändertes Stanzwerkzeug zu verwenden. Es ist aber auch möglich, vorhandene bekannte Ankerplatten dadurch mit erfindungsgemäß angeordneten Führungsflächen auszustatten, daß

– von den drei Führungsflächen der auflaufenden Bremsbacke die dritte Führungsfläche von einem auf die Ankerplatte aufgelegten Blech gebildet ist, und

– von den drei Führungsflächen der ablaufenden Bremsbacke die beiden in einer gemeinsamen achsnormalen Ebene liegenden Führungsflächen von je einem auf die Ankerplatte aufgelegten Blech gebildet sind.

Die hierzu erforderlichen Bleche sind Stanzteile, die sich leicht herstellen, raumsparend lagern und in montierte Bremsen einbauen lassen. Es erfordert deshalb nur geringen Aufwand, bekannte Trommelbremsen, die durch unangenehme Geräusche auffallen, entsprechend der Erfindung umzugestalten.

Die erfindungsgemäß angestrebte leichte Verkantung mindestens einer Bremsbacke läßt sich auch durch entsprechende Maßnahmen an der Bremsbacke selbst erzielen, beispielsweise durch seitliche Vorsprünge unterschiedlicher Höhe, mit denen sich die Bremsbacke an den zugehörigen Führungsflächen an der Ankerplatte abstützt.

Es hat sich als zweckmäßig erwiesen, wenn die dritte Führungsfläche für jede Bremsbacke in einer achsnormalen Ebene angeordnet ist, die gegen die gemeinsame achsnormale Ebene der beiden anderen Führungsflächen für dieselbe Bremsbacke um 0,4 bis 0,7 mm versetzt ist.

Ausführungsbeispiele der Erfindung werden im folgenden anhand schematischer Zeichnungen mit weiteren Einzelheiten erläutert. Es zeigen:

Fig. 1 eine Trommelbremse ohne Bremstrommel, in axialer Richtung betrachtet,

Fig. 2 eine erste Ausführungsform einer erfindungsgemäßen Trommelbremse in einem vereinfachten axialen Schnitt bei leichter Bremsbetätigung,

Fig. 3 dieselbe Ausführungsform in axialem Schnitt bei kräftiger Bremsbetätigung,

Fig. 4 eine zweite Ausführungsform einer erfindungsgemäßen Bremse in axialem Schnitt bei leichter Bremsbetätigung,

Fig. 5 eine dritte Ausführungsform einer erfindungsgemäßen Bremse in axialem Schnitt bei leichter Bremsbetätigung,

Fig. 6 die Ankerplatte der in Fig. 1 dargestellten Bremse, in Achsrichtung betrachtet,

Fig. 7 eine vierte Ausführungsform einer erfindungsgemäßen Bremse in einem halbseitig gezeichneten axialen Schnitt bei leichter Bremsbetätigung, und

Fig. 8 den Teilschnitt VIII-VIII in Fig. 7.

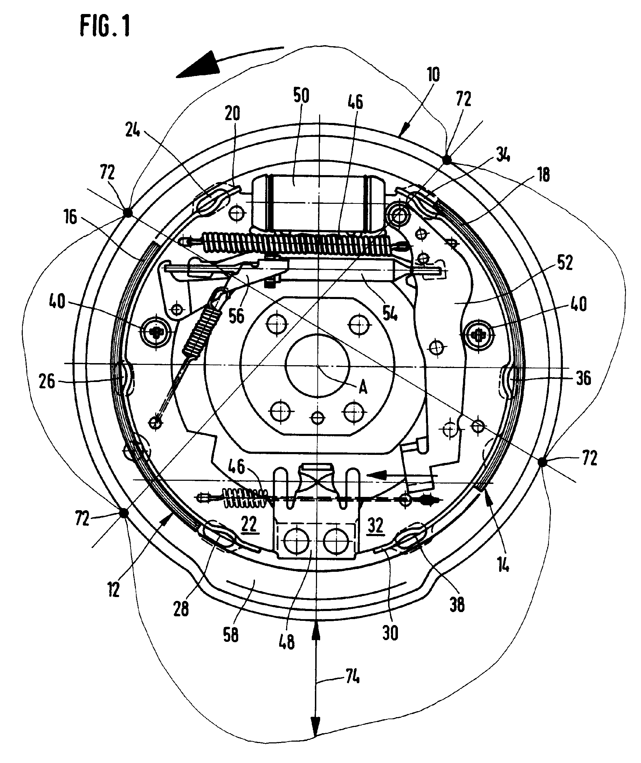

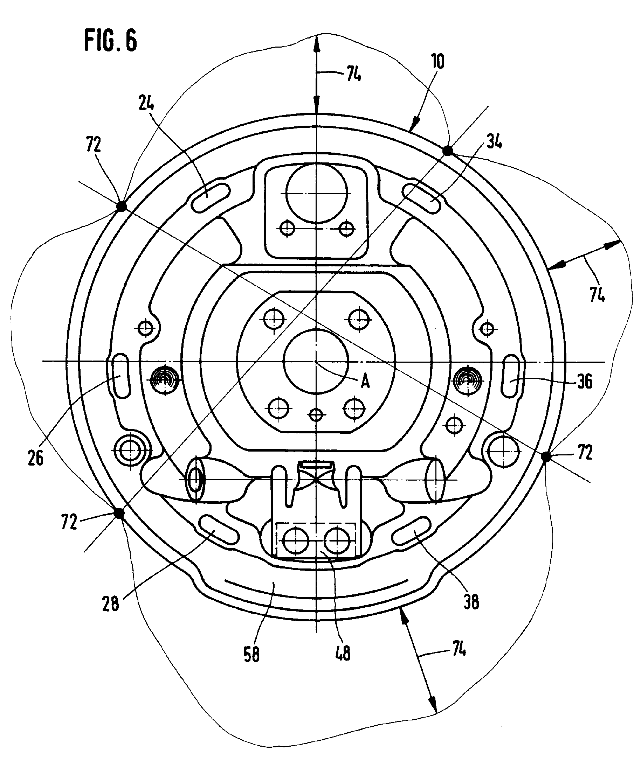

Gemäß Fig. 1 und 6, die für alle dargestellten Ausführungsformen gelten, sind an einer Ankerplatte 10 eine auflaufende Bremsbacke 12 und eine ablaufende Bremsbacke 14 geführt, die je einen Bremsbelag 16 bzw. 18 aufweisen. Die auflaufende Bremsbacke 12 hat einen teilzylindrischen Flansch 20, an dem der Bremsbelag 16 befestigt ist, sowie einen ebenen Steg 22. Der Flansch 20 liegt bei unbetätigter Bremse an drei Führungsflächen 24, 26 und 28 der Ankerplatte 10 an.

Die beiden Führungsflächen 24 und 28 haben voneinander in bezug auf eine Achse A einen Winkelabstand von ungefähr 120° und sind für die zugehörige Bremsbacke 12 äußere Führungsflächen; die dritte Führungsfläche 26 ist als mittlere Führungsfläche ungefähr auf der Winkelhalbierenden zwischen den beiden äußeren Führungsflächen 24 und 28 angeordnet, hat also von diesen je einen Abstand von ungefähr 60°. In entsprechender Weise hat die ablaufende Bremsbacke 14 einen teilzylindrischen Flansch 30, an dem der Bremsbelag 18 befestigt ist, sowie einen ebenen Steg 32. Der Flansch 30 liegt bei unbetätigter Bremse an drei an der Ankerplatte 10 ausgebildeten Führungsflächen 34, 36 und 38 an.

Für die Anlage des Flansches 20 an allen drei zugehörigen Führungsflächen 24, 26 und 28 sowie des Flansches 30 an allen drei zugehörigen Führungsflächen 34, 36 und 38 sorgen bei unbetätigter oder mit nur mäßiger Kraft betätigter Bremse zwei Niederhaltefedern 40, die je einer der Bremsbacken 12 und 14 zugeordnet sind. Jede der beiden Niederhaltefedern 40 ist eine schraubenförmige Druckfeder, die zwischen dem Steg 22 bzw. 32 der zugehörigen Bremsbacke 12 bzw. 14 und einer Scheibe 42 an einem Ende eines Zugankers 44 eingespannt ist. Jeder der beiden Zuganker 44 erstreckt sich durch die Ankerplatte 10 und den Steg 22 bzw. 32 der zugehörigen Bremsbacke 12 bzw. 14 mit solchem Spiel hindurch, daß die zum Betätigen der Bremse erforderlichen Bewegungen der Bremsbacken 12 und 14 durch die Zuganker 44 nicht behindert werden.

Die beiden Bremsbacken 12 und 14 sind miteinander durch Rückstellfedern 46 verbunden, die als Zugfedern ausgebildet sind und sich parallel zur Ankerplatte 10 erstrecken. Die in Fig. 1 unteren Enden der Bremsbacken 12 und 14 sind an einem Widerlager 48 anliegend gehalten, das an der Ankerplatte befestigt ist. Zwischen den in Fig. 1 oberen Enden der beiden Bremsbacken 12 und 14 ist eine hydraulische Betätigungsvorrichtung 50 angeordnet, deren Zylinder an der Ankerplatte 10 befestigt ist und zwei gegenläufig bewegbare Kolben enthält, an denen je eine der beiden Bremsbacken 12 und 14 abgestützt ist.

Für Feststellbremsungen ist ein Handbremshebel 52 an der ablaufenden Bremsbacke 14 gelagert und durch eine längeneinstellbare Strebe 54 mit der auflaufenden Bremsbacke 12 verbunden. Die Strebe 54 ist Bestandteil einer selbsttätigen Nachstellvorrichtung üblicher Bauart; die Länge der Strebe 54 wird schrittweise durch Schwenkungen einer an der auflaufenden Bremsbacke 12 gelagerten Klinke 56 immer dann vergrößert, wenn ein gewünschtes Bremslüftspiel durch Abnutzung der Bremsbeläge 16 und 18 überschritten worden ist und die Bremse dann mittels der hydraulischen Betätigungsvorrichtung 50 betätigt wird.

Die Ankerplatte 10 hat nahe ihrem äußeren Rand eine ringförmige Vertiefung 58; in diese ragt ein stirnseitiges Ende einer Bremstrommel 60 hinein, die an einem Fahrzeugrad zu befestigen und mit diesem um die Achse A drehbar ist. Die Hauptdrehrichtung der Bremstrommel 60 (bei Vorwärtsfahrt des zugehörigen Fahrzeugs) ist in Fig. 1 mit einem Pfeil bezeichnet.

Soweit bisher beschrieben, ist die Trommelbremse von üblicher Bauart. Während jedoch bei bekannten Trommelbremsen dieser Bauart sämtliche Führungsflächen für die beiden Bremsbacken in einer gemeinsamen, zur Achse A normalen Ebene angeordnet sind, ist allen dargestellten Ausführungsformen der Erfindung gemeinsam, daß die Führungsflächen auf mindestens zwei verschiedene achsnormale Ebenen verteilt sind.

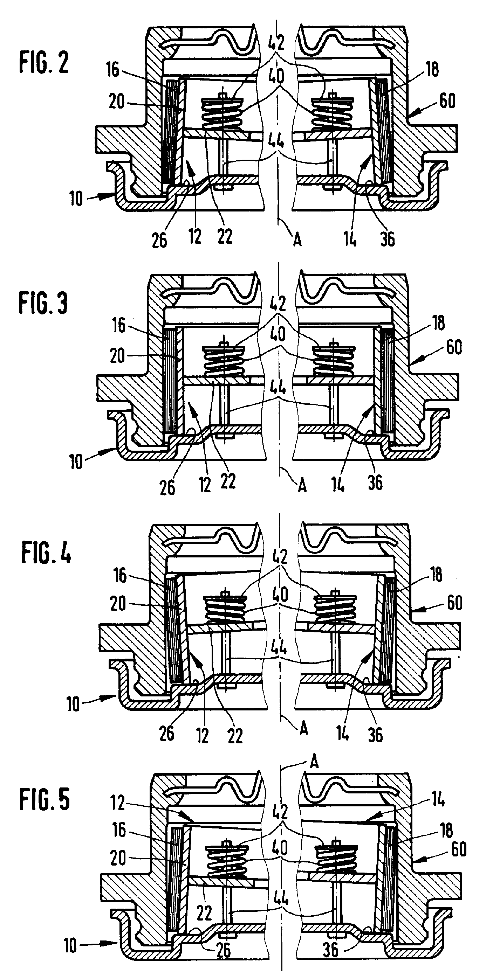

Bei der in Fig. 2 und 3 dargestellten ersten Ausführungsform liegen nur je zwei Führungsflächen 24 und 28 sowie 34 und 38 der beiden Bremsbacken 12 und 14 in einer gemeinsamen, zur Achse A normalen Ebene. Nur diese, in bezug auf die zugehörige Bremsbacke äußeren Führungsflächen 24 und 28 sowie 34 und 38 sind also in üblicher Weise angeordnet. Die mittleren Führungsflächen 26 und 36 beider Bremsbacken 12 und 14 sind gegenüber den äußeren Führungsflächen 24 und 28 sowie 34 und 38 erhaben; sie sind in einer gemeinsamen, zur Achse A normalen Ebene angeordnet, die bei der Betrachtung gemäß Fig. 2 und 3 höher liegt als die gemeinsame Ebene der äußeren Führungsflächen 24 und 28 sowie 34 und 38. Diese erhabene Anordnung der beiden mittleren Führungsflächen 26 und 36 hat zur Folge, daß beide Bremsbacken 12 und 14 sich bei unbetätigter Bremse gegensinnig schrägstellen und diese Schrägstellung gemäß Fig. 2 auch noch bei leicht betätigter Bremse beibehalten.

Bei leicht betätigter Bremse berühren die Bremsbeläge 16 und 18 die Bremstrommel 60 in der Nähe derjenigen Stirnfläche, die der Ankerplatte 10 zugewandt ist. Dabei bleiben die Flansche 20 und 30 beider Bremsbacken 12 und 14 auf allen drei zugehörigen Führungsflächen 24, 26 und 28 bzw. 34, 36 und 38 der Ankerplatte 10 liegen. Infolgedessen werden Schwingungen der Ankerplatte 10 verhindert oder zumindest gedämpft, denn die Bremstrommel 60 ist zusammen mit den beiden Bremsbacken 12 und 14 an die Ankerplatte 10 angekoppelt.

Bei kräftiger Betätigung der Bremse legen sich die Bremsbeläge 16 und 18 gemäß Fig. 3 im wesentlichen vollflächig an die Bremstrommel 60 an; gleichzeitig entfernen sich die Flansche 20 und 30 etwas von ihren äußeren Führungsflächen 24 und 28 bzw. 34 und 38. Durch die vollflächige Anlage der Bremsbeläge 16 und 18 an der Bremstrommel 60 und durch den weiterhin bestehenden Kontakt zwischen den Flanschen 20 und 30 mit Führungsflächen 26 und 36 werden Schwingungen der einzelnen Bauteile verhindert.

Die Ausführungsform gemäß Fig. 4 kann als Gegenstück der in Fig. 2 dargestellten bezeichnet werden. Gemäß Fig. 4 liegen wiederum die äußeren Führungsflächen 24 und 28 sowie 34 und 38 der beiden Bremsbacken 12 und 14 in einer gemeinsamen, zur Achse A normalen Ebene; gegenüber dieser Ebene sind jedoch die beiden mittleren Führungsflächen 26 und 36 vertieft angeordnet. Diese Anordnung hat zur Folge, daß bei unbetätigter Bremse und auch bei leichter Bremsbetätigung gemäß Fig. 4 die beiden Bremsbacken 12 und 14 geringfügig voneinander weg gekippt sind. Bei leichter Bremsbetätigung berühren die Bremsbeläge 16 und 18 die Bremstrommel 60 deshalb nur in deren von der Ankerplatte 10 entferntem Bereich. Diese zweite Ausführungsform ist für Schwingungsanregung der Ankerplatte 10 empfindlicher, für Schwingungsanregung der Bremstrommel 60 jedoch unempfindlicher als die in Fig. 2 dargestellte erste Ausführungsform.

Welche der beiden vorgenannten Ausführungsformen insgesamt vorzuziehen ist, hängt davon ab, wie die Ankerplatte 10 und die Bremstrommel 60 im einzelnen gestaltet sind.

Die günstigen Wirkungen der beiden in Fig. 2 einerseits und in Fig. 4 andererseits dargestellten Ausführungsformen lassen sich gemäß Fig. 5 summieren, indem die Führungsflächen 24, 26, 28 sowie 34, 36, 38 so angeordnet werden, daß die beiden Bremsbacken 12 und 14 im Ruhezustand der Bremse sowie bei leichter Betätigung gleichsinnig gekippt sind. Dies geschieht gemäß Fig. 5 dadurch, daß die mittlere Führungsfläche 26 der auflaufenden Bremsbacke 12 gegenüber deren äußeren Führungsflächen 24 und 28 erhaben ist, während die mittlere Führungsfläche 36 der ablaufenden Bremsbacke 14 gegenüber deren äußeren Führungsflächen 34 und 38 vertieft angeordnet ist. Auf diese Weise werden Schwingungen der Bremstrommel 60 sowohl im Bereich von deren der Ankerplatte 10 zugewandtem Ende wie im Bereich des entgegengesetzten Endes gedämpft und gleichzeitig werden auch Schwingungen der Ankerplatte 10 selbst gedämpft.

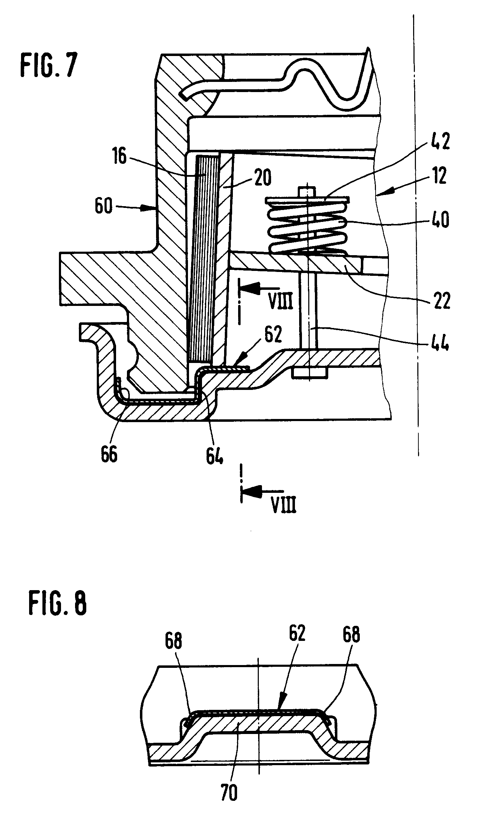

Gemäß Fig. 1 bis 6 sind sämtliche Führungsflächen 24, 26 und 28 sowie 34, 36 und 38 unmittelbar von ovalen, in Umfangsrichtung langgestreckten Vorsprüngen der Ankerplatte 10 gebildet. Im Gegensatz dazu sind bei der in Fig. 7 und 8 dargestellten vierten Ausführungsform der Erfindung diejenigen Führungsflächen, die

EP 0 396 145 B1

gegenüber benachbarten Führungsflächen erhaben sein sollen, an je einem Blech 62 ausgebildet, das zwischen der Ankerplatte 10 und dem Steg 22 bzw. 32 der zugehörigen Bremsbacke 12 bzw. 14 eingelegt ist. Jedes Blech 62 hat einen in die ringförmige Vertiefung 58 eingreifenden Teil mit einer radial inneren Abkantung 64 und einer radial äußeren Abkantung 66 und ist dadurch an unbeabsichtigten radialen Verschiebungen gehindert. Damit die Bleche 62 sich nicht in Umfangsrichtung, längs der ringförmigen Vertiefung 58 verschieben können, sind an jedem Blech Flansche 68 ausgebildet, die gemäß Fig. 8 über eine Ausprägung 70 der Ankerplatte 10 greifen.

Mit drei Blechen 62 der in Fig. 7 und 8 dargestellten Art läßt sich die in Fig. 5 abgebildete Anordnung der Bremsbacken 12 und 14 an einer Ankerplatte 10 erreichen, die zur Abstützung der beiden Bremsbacken je drei gleichhohe Ausprägungen 70 aufweist. Von den drei Ausprägungen 70 für die auflaufende Bremsbacke 12 wird die mittlere Ausprägung durch Auflegen eines Blechs 62 erhöht, während von den drei Ausprägungen für die ablaufende Bremsbacke 14 die beiden äußeren Ausprägungen durch je ein Blech 62 erhöht werden, so daß die zwischen ihnen liegende mittlere Ausprägung im Verhältnis dazu tiefer liegt.

In Fig. 1 und 6 sind Schwingungen der Ankerplatte 10 dargestellt, die ohne die beschriebenen erfindungsgemäßen Maßnahmen auftreten. Die Schwingungen haben vier Schwingungsknoten 72 und erreichen in den dazwischenliegenden Bereichen teilweise erhebliche Amplituden 74. Diese Amplituden lassen sich zwar durch Ankoppeln träger Massen vermindern; dadurch werden jedoch Schwingungen der Bremstrommel 60 nicht gedämpft. Eine gleichzeitig an der Ankerplatte 10 und vor allem an der Bremstrommel 60 wirksame Dämpfung ergibt sich erst durch die beschriebenen erfindungsgemäßen Maßnahmen.

Bei ausgeführten erfindungsgemäßen Trommelbremsen, bei denen die Bremstrommel 60 einen Innendurchmesser von 228 mm hat, genügt es, die Führungsfläche 26 für die auflaufende Bremsbacke 12 um etwa 0,4 mm bis 0,7 mm gegenüber den Führungsflächen 24 und 28 erhaben anzuordnen und die Führungsfläche 36 für die ablaufende Bremsbacke 14 um etwa den gleichen Betrag gegenüber den Führungsflächen 34 und 38 vertieft anzuordnen, um eine optimale Dämpfung zu erreichen. Die Schrägstellung der Bremsbacken 12 und 14, die in Fig. 5 ebenso wie in Fig. 2, 4 und 7 stark übertrieben dargestellt ist, beträgt etwa 0,5° bis 1°, vorzugsweise 0,7° bis 0,8°. Eine derart geringe Schrägstellung hat sich im allgemeinen als vollständig ausreichend erwiesen und hat den Vorteil, daß sie nicht dazu zwingt, das Bremslüftspiel nennenswert größer als üblicherweise zu bemessen.

Bei einer weiteren, in den Zeichnungen nicht dargestellten Ausführungsform liegen alle Führungsflächen 24, 26, 28 und 34, 36, 38 an der Ankerplatte 10 wie üblich in einer gemeinsamen, zur Achse A normalen Ebene; die Flansche 20 und 30 der Bremsbacken 12 und 14 haben jedoch seitliche Vorsprünge unterschiedlicher Höhe, mit denen sie an den Führungsflächen anliegen. Solche Vorsprünge lassen sich beispielsweise beim Ausstanzen der Flansche 20 und 30 aus Blech ohne nennenswerte zusätzliche Kosten herstellen.

## Patentansprüche

1. Trommelbremse mit
– Bremsbacken (12; 14), deren Bremsflächen in Umfangsrichtung gegeneinander versetzt der Bremsfläche einer Bremstrommel (60) gegenüberliegen,
– mindestens einer Betätigungsvorrichtung (50) zum Andrücken der Bremsbacken (12; 14) an die Bremstrommel (60),
– einer Ankerplatte (10), die für die Bremsbacken (12; 14) je drei Führungsflächen (24, 26, 28; 34, 36, 38) aufweist, und
– Niederhaltefedern (40), die bestrebt sind, die Bremsbacken (12; 14) an ihren Führungsflächen (24, 26, 28; 34, 36, 38) anliegend zu halten,
dadurch **gekennzeichnet**, daß

– von den drei Führungsflächen (24, 26, 28; 34, 36, 38) mindestens einer Bremsbacke (12; 14) nur zwei (24, 28; 34, 38) mindestens annähernd in einer gemeinsamen, zur Achse (A) der Bremstrommel (60) normalen Ebene liegen, und
– die dritte Führungsfläche (26; 36) derselben Bremsbacke (12; 14) gegen die genannte Ebene axial versetzt angeordnet ist, so daß
– diese Bremsbacke (12; 14) von der zugehörigen Niederhaltefeder (40) in einer Ruhestellung gehalten wird, in der ihre Bremsfläche in Bezug auf die Bremstrommel (60) leicht verkantet ist.
2. Trommelbremse nach Anspruch 1,
dadurch **gekennzeichnet**, daß die dritte Führungsfläche (26; 36) ungefähr auf der Winkelhalbierenden zwischen den in einer gemeinsamen achsnormalen Ebene liegenden Führungsflächen (24, 28; 34, 38) derselben

5

Bremsbacke (12; 14) angeordnet ist.

3. Trommelbremse nach Anspruch 1 oder 2 mit einer bei der Hauptdrehrichtung der Bremstrommel (60) auf ein Widerlager (48) auflaufenden Bremsbacke (12) und einer ablaufenden Bremsbacke (14), dadurch **gekennzeichnet** , daß

– von den drei Führungsflächen (24, 26, 28) der auflaufenden Bremsbacke (12) die dritte Führungsfläche (26) gegenüber den beiden anderen Führungsflächen (24, 28) erhaben angeordnet ist, und

– von den drei Führungsflächen (34, 36, 38) der ablaufenden Bremsbacke (14) die dritte Führungsfläche (36) gegenüber den beiden anderen Führungsflächen (34, 38) vertieft angeordnet ist.

4. Trommelbremse nach Anspruch 3, dadurch **gekennzeichnet** , daß

– von den drei Führungsflächen (24, 26, 28) der auflaufenden Bremsbacke (12) die dritte Führungsfläche (26) von einem auf die Ankerplatte (10) aufgelegten Blech (62) gebildet ist, und

– von den drei Führungsflächen (34, 36, 38) der ablaufenden Bremsbacke (14) die beiden in einer gemeinsamen achsnormalen Ebene liegenden Führungsflächen (34, 38) von je einem auf die Ankerplatte (10) aufgelegten Blech (62) gebildet sind.

5. Trommelbremse nach einem der Ansprüche 1 bis 4, dadurch **gekennzeichnet** , daß die dritte Führungsfläche (26; 36) für jede Bremsbacke (12; 14) in einer achsnormalen Ebene angeordnet ist, die gegen die gemeinsame achsnormale Ebene der beiden anderen Führungsflächen (24, 28; 34, 38) für dieselbe Bremsbacke (12; 14) um 0,4 bis 0,7 mm versetzt ist.

6. Trommelbremse mit

– Bremsbacken (12; 14), deren Bremsflächen in Umfangsrichtung gegeneinander versetzt der Bremsfläche einer Bremstrommel (60) gegenüberliegen,

– mindestens einer Betätigungsvorrichtung (50) zum Andrücken der Bremsbacken (12; 14) an die Bremstrommel (60),

– einer Ankerplatte (10), die für die Bremsbacken (12; 14) je drei Führungsflächen (24, 26, 28; 34, 36, 38) aufweist, und

– Niederhaltefedern (40), die bestrebt sind, die Bremsbacken (12; 14) an ihren Führungsflächen (24, 26, 28; 34, 36, 38) anliegend zu halten,

dadurch **gekennzeichnet** , daß mindestens eine der Bremsbacken (12; 14) seitliche Vorsprünge unterschiedlicher Höhe aufweist, mit denen sie sich an den zugehörigen-Führungsflächen (24, 26, 28; 34, 36, 38) an der Ankerplatte (10) derart abstützt, daß diese Bremsbacke (12; 14) von der zugehörigen Niederhaltefeder (40) in einer Ruhestellung gehalten wird, in der ihre Bremsfläche in Bezug auf die Bremstrommel (60) leicht verkantet ist.

## Claims

1. Drum brake comprising

– brake shoes (12; 14) of which the brake surfaces offset in the peripheral direction with respect to each other lie opposite the brake surface of a brake drum (60),

– at least one actuator (50) for pressing the brake shoes (12; 14) onto the brake drum (60),

– an anchor plate (10) which has three guide surfaces (24, 26, 28; 34, 36, 38) for each of the brake shoes (12; 14) and

– hold-down springs (40) which tend to keep the brake shoes (12; 14) in engagement at their guide surfaces (24, 26, 28; 34, 36, 38),

**characterized** in that

– of the three guide surfaces (24, 26, 28; 34, 36, 38) of at least one brake shoe (12; 14) only two (24, 28; 34, 38) lie at least approximately in a common plane normal to the axis (A) of the brake drum (60), and

– the third guide surface (26; 36) of the same brake shoe (12; 14) is arranged axially offset with respect to said plane so that

– said brake shoe (12; 14) is held by the associated hold-down spring (40) in a rest position in which its brake surface is slightly tilted with respect to the brake drum (60).

2. Drum brake according to claim 1, **characterized** in that the third guide surface (26; 36) is arranged approximately on the angle bisector between the guide surfaces (24, 28; 34, 38) of the same brake shoe (12; 14) lying in a common plane normal to the axis.

3. Drum brake according to claim 1 or 2 comprising a primary brake shoe running onto an abutment (48) in the main direction of rotation of the brake drum (60) and a secondary brake shoe (14),

**characterized** in that

– of the three guide surfaces (24, 26, 28) of the primary brake shoe (12) the third guide surface (26) is arranged elevated with respect to the two other guide surfaces (24, 28), and

– of the three guide surfaces (34, 36, 38) of the secondary brake shoe (14) the third guide surface (36) is arranged depressed with respect to the two other guide surfaces (34, 38).

4. Drum brake according to claim 3,

**characterized** in that

– of the three guide surfaces (24, 26, 28) of the primary brake shoe (12) the third guide surface (26) is formed by a metal plate (62) placed on the anchor plate (10), and

– of the three guide surfaces (34, 36, 38) of the secondary brake shoe (14) the two guide surfaces (34, 38) lying in a common plane normal to the axis are each formed by a metal plate (62) placed on the anchor plate (10).

5. Drum brake according to any one of claims 1 to 4,

**characterized** in that the third guide surface (26; 36) for each brake shoe (12; 14) is arranged in a plane which is normal to the axis and which is offset 0.4 to 0.7 mm with respect to the common plane of the two other guide surfaces (24, 28; 34, 38) normal to the axis for the same brake shoe (12; 14).

6. Drum brake comprising

– brake shoes (12; 14) of which the brake surfaces offset in the peripheral direction with respect to each other lie opposite the brake surface of a brake drum (60),

– at least one actuator (50) for pressing the brake shoes (12; 14) onto the brake drum (60),

– an anchor plate (10) which has three guide surfaces (24, 26, 28; 34, 36, 38) for each of the brake shoes (12; 14) and

– hold-down springs (40) which tend to keep the brake shoes (12; 14) in engagement at their guide surfaces (24, 26, 28; 34, 36, 38),

**characterized** in that at least one of the brake shoes (12; 14) comprises lateral projections of different height with which it bears on the associated guides surfaces (24, 26, 28; 34, 36, 38) on the anchor plate (10) in such a manner that said brake shoe (12; 14) is held by the associated hold-down spring (40) in a rest position in which the brake surface thereof is slightly tilted with respect to the brake drum (60).


## Revendications

1. Frein à tambour comportant

– des mâchoires de frein (12; 14) dont les surfaces de freinage, décalées l'une par rapport à l'autre dans la direction périphérique, sont disposées en face de la surface de freinage d'un tambour de frein (60),

– au moins un mécanisme de manoeuvre (50) pour appliquer sous pression les mâchoires de frein (12; 14) contre le tambour de frein (60),

– une plaque d'ancrage (10), qui présente, pour chacune des mâchoires de frein (12; 14), trois surfaces de guidage (24, 26, 28; 34, 36, 38), et

– des ressorts de maintien (40) qui s'efforcent de maintenir les mâchoires de frein (12; 14) appliquées contre leur surface de guidage (24, 26, 28; 34, 36, 38),

frein à tambour **caractérisé**

– par le fait que, des trois surfaces de guidage (24, 26, 28; 34, 36, 38), d'au moins l'une des mâchoires de frein (12; 14 ), deux seulement ( 24, 28; 34, 36, 38 ) se situent, au moins approximativement, dans un plan commun, normal à l'axe (A) du tambour de frein (60), et

– par le fait que la troisième surface de guidage (26; 36) de cette même mâchoire de frein (12; 14) est disposée décalée axialement par rapport au plan indiqué, de sorte que

– cette mâchoire de frein (12; 14) est maintenue, par le ressort de maintien correspondant (40), dans une position de repos dans laquelle sa surface de freinage est légèrement inclinée par rapport au tambour de freinage (60).

2. Frein à tambour selon la revendication 1,

**caractérisé** par le fait que la troisième surface de guidage (26; 36) est approximativement disposée sur la bissectrice située entre les surfaces de guidage (24, 28; 34, 38), situées dans un plan commun normal à l'axe, de cette même mâchoire de frein (12; 14).

3. Frein à tambour selon la revendication 1 ou 2, présentant une mâchoire de frein (12) qui, lorsque le tambour de frein (60) tourne dans le sens de rotation principal, s'approche d'une butée (48), ainsi qu'une mâchoire de frein (14) qui s'écarte de la butée,

**caractérisé**

– par le fait que, des trois surfaces de guidage (24, 26, 28) de la mâchoire de frein (12) qui s'approche de la butée, la troisième surface de guidage (26) est disposée en surélévation par rapport aux deux autres surfaces de guidage (24, 28), et

– par le fait que, des trois surfaces de guidage (34, 36, 38) de la mâchoire de frein (14) qui s'écarte de la butée, la troisième surface de guidage (36) est disposée en contrebas par rapport aux deux autres surfaces de guidage (34, 38).

4. Frein à tambour selon la revendication 3,

**caractérisé**

– par le fait que, des trois surfaces de guidage ( 24, 26, 28) de la mâchoire de frein (12) qui s'approche de la butée, la troisième surface de guidage (26) est formée d'une tôle (62) posée sur la plaque d'ancrage (10) et

– par le fait que Des trois surfaces de guidage (34, 36, 38) de la mâchoire de frein (14) qui s'écarte de la butée, les deux surfaces de guidage (34, 38) qui sont situées dans un plan commun normal à l'axe sont formées chacune par une tôle (62) posée sur la plaque d'ancrage (10).

5. Frein à tambour selon l'une des revendications 1 à 4,

**caractérisé** par le fait que la troisième surface de guidage (26; 36) pour chaque mâchoire de frein (12; 14) est disposée dans un plan normal à l'axe qui est décalé, de 0,4 à 0,7 mm, par rapport au plan commun normal à l'axe, des deux autres surfaces de guidage (24, 28; 34, 38) pour cette même mâchoire de frein (12; 14).

6. Frein à tambour comportant

– des mâchoires de frein (12; 14) dont les surfaces de freinage, décalées l'une par rapport à l'autre dans la direction périphérique, sont disposées en face de la surface de freinage d'un tambour de frein (60),

– au moins un mécanisme de manoeuvre (50) pour appliquer sous pression les mâchoires de frein (12; 14) contre le tambour de frein (60),

– une plaque d'ancrage (10), qui présente, pour chacune des mâchoires de frein (12; 14), trois surfaces de guidage (24, 26, 28; 34, 36, 38 ), et

– des ressorts de maintien (40) qui s'efforcent de maintenir les mâchoires de frein (12; 14) appliquées contre leur surface de guidage (24, 26, 28; 34, 36, 38),

frein à tambour **caractérisé** par le fait qu'au moins l'une des mâchoires de frein (12; 14) présente des bossages latéraux de différentes hauteurs par lesquels les surfaces de guidage (24, 26, 28; 34, 36, 38) correspondantes s'appuient sur la plaque d'ancrage (10) de façon telle que cette mâchoire de frein (12; 14) est maintenue, par le ressort de maintien correspondant (40), dans une position de repos dans laquelle as surface de freinage est légèrement inclinée par rapport au tambour de frein (60).

FIG.1

FIG. 2

FIG. 3

FIG. 4

FIG. 5

**FIG. 6**

FIG. 7

FIG. 8